# EUROPEAN PATENT APPLICATION

(11) **EP 2 306 682 A1**
(43) Date of publication of application: **06.04.2011**
(21) Application number: 09252314.1
(22) Date of filing: 30.09.2009
(51) Int. Cl.: H04L 29/06

(54) **Method of configuring a device to self-authenticate**

(71) Applicant: British Telecommunications public limited company, London, Greater London EC1A 7AJ (GB)
(72) Inventor: The designation of the inventor has not yet been filed
(74) Representative: Brinck, Coreena Fiona Anne

(57) **Abstract**

A method for a communications device to access service information associated with a service identifier, the method comprising:
at the device (12):
generating a request for service information, the request including an identifier (ServID);
at a server remote (80) from the device:
receiving the request;
processing the request to extract an identifier (ServID);
performing a look-up operation based on said identifier which retrieves at least authentication information (AuthCode) which was generated remotely from the device to uniquely configure access by the device to service information associated with said service identifier;
presenting said authentication information and said service identifier to a service platform via which said service information is retrievable;
at the service platform (32):
processing the request to extract said service identifier and said authentication information;
verifying that the authentication information and service identifier match equivalent data values stored in association with service information, and if so:
sending service information (ServInfo) to said requesting device.

## Description

The present invention relates to a method of configuring a device to automatically provide authentication information to retrieve data from a remote server. In particular but not exclusively, the invention relates to a method which configures a device to use a connection-less packet-oriented communications protocol session for a service which requires the provision of credientials such as a password and/or identification of a physical communications line to which the device is attached.

The Internet Protocol is a connection-less packet-based communications protocol over which a number of telephony services can be provided, for example, VoIP, and also voicemail services. Access to voicemail service information using a conventional telephone device is well known in the art. Voicemail may be stored on the same telephone device or remotely on a server which provides a data storage facility for mail messages for several devices. Voicemail messages are left on a device if it has functionality to retrieve data from a remote storage facility or if the messages is recorded on the device following the device picking up the call. However, a user of a PSTN phone cannot see if a voicemail message is being left as they are speaking to another user, even if they can see that there is another caller waiting to connect to them using a service such as caller waiting. Moreover, a user cannot retrieve a voicemail message stored in association with the calling line identity of a PSTN phone line whilst a device is using the PSTN phone line conventionally as the line is occupied.

In some voicemail services, in order to access voicemail message information, a user needs to log-in and provide authentication information such as a password. This is time-consuming and problematic for the user. A device cannot automatically retrieve information if a user must provide such credentials each time new information is to be retrieved.

### SUMMARY STATEMENTS OF INVENTION

The aspects of the invention are as set out by the accompanying claims and selected embodiments are as set out by the accompanying claims and description below. The invention may comprise any suitable combination of aspects and selected embodiments apparent to one of ordinary skill in the art.

One aspect of the invention seeks to provide a method for a communications device to access service information associated with a service identifier, the method comprising:
at the device:
   generating a request for service information, the request including an identifier;
   at a server remote from the device:
      receiving the request;
      processing the request to extract an identifier;
      performing a look-up operation based on said identifier which retrieves at least authentication information which was generated remotely from the device to uniquely configure access by the device to service information associated with said service identifier;
      presenting said authentication information and said service identifier to a service platform via which said service information is retrievable;
at the service platform:
   processing the request to extract said service identifier and said authentication information;
   verifying that the authentication information and service identifier match equivalent data values stored in association with service information, and if so:
      sending service information to said requesting device.

The identifier may comprise a service identifier for the service subscription, and said request is processed to extract the service identifier, and said look-up operation is based on said service identifier to retrieve said authentication information.

The identifier may comprise a device identifier for the device, and said request is processed to extract said device identifier to retrieve both said service identifier and authentication information.

The remote server may also provide address information for said device to said service platform, and wherein said service platform uses said address information to send said service information to the device.

The service platform may send said service information to said remote server, and said remote server forwards said service information to said device.

Another aspect of the invention provides a method for a communications device to access service information associated with a service identifier, the method comprising:
at the device:
   generating a request for service information, the request including an identifier;
   at a server remote from the device:
      receiving the request;
      processing the request to extract an identifier;
      performing a look-up operation based on said identifier which retrieves at least authentication information which was generated remotely from the device to uniquely configure access by the device to service information associated with said service identifier;
      sending said authentication information and said service identifier to the device;
   at the device generating a second request for service information to a service platform via which said service information is retrievable;
at the service platform:
   processing the request to extract said service identifier and said authentication information;
   verifying that the authentication information and service identifier match equivalent data values stored in association with service information, and if so:
      sending service information to said requesting device.

During the initial set up of the device (12) to enable the device to be automatically authenticated for access to said service information associated with said service identifier, the device may be configured by a method comprising:
at a server remote from the device (12):
   receiving a message sent from the device (12);
      processing the message to extract a device identifier;
      determining if said device identifier is associated with a service identifier, and if so:
   generating an authentication code;
   storing the authentication code in association with the device identifier and the service identifier;
   registering said authentication code in association with the service identifier.
   sending device-specific configuration data to the device (12) for use during the configuration process,
   wherein after the configuration process is completed, the device-specific configuration data enables automatic authentication using said authentication code when the device seeks access to said service information.

Another aspect of the invention comprises a method for a communications device to access service information, the method comprising:
at the device:
   generating a request for service information, the request including a device identifier for the device;
   at a server remote from the device:
      receiving the request;
      processing the request to extract the device identifier;
      performing a look-up operation based on said device identifier which retrieves a service identifier and authentication information which was generated remotely from the device to uniquely configure access by the device to service information associated with said service identifier;
      presenting said authentication information and said service identifier to a service platform via which said service information is retrievable;
at the service platform:
   processing the request to extract said service identifier and said authentication information;
   verifying that the authentication information and service identifier match equivalent data values stored in association with service information, and if so:
      sending service information to said requesting device.

Another aspect of the invention relates to a method of configuring a device for use in any of the other method aspects, the method generating device-specific configuration data during the initial set up of a device, and comprising, during a configuration process running on the device, sending from the device a first message and including a device identifier to a server using a first mode of communication associable with a service identifier, sending from the device a second message including the device identifier to a server using a second mode of communication not associable with said service identifier, processing the first message to associate the device identifier with the service identifier, and processing the second message to query if the device identifier has been previously associated with the service identifier, and if so, sending device-specific configuration data to the device for use during the configuration process, wherein after the configuration process is completed, the device-specific configuration data enables authentication using said service identifier when the device uses said second mode of communication.

The method may further comprise:
storing the device identifier in association with a plurality of different service identifiers;
wherein, when a request for service information is received, information for each different service identifier is retrieved.

The requests for information for each different service identifier may be automatically generated, and when information is retrieved, a notification of that information for said service identifier has been received may be displayed on the device.

One or more embodiments of the invention seek to provide a method of activating a device to enable the device to retrieve service information which is uniquely associated with a specific service subscription. The device is configured and activated using unique configuration information so that service information can be retrieved without requiring manual input (e.g. by a user) of data which identifies the specific service subscription and/or manual input of additional authentication data such as a username and/or password. In this way, the configured device is able to automatically retrieve the service information from a remote service platform using a communications system.

The service information is stored in association with a service identifier, which associates the stored data with a specific service subscription. The service identifier may comprise, for example, a user identifier and/or a device identifier, and/or a telephone number identifier such as, for example, a calling line identifier in a wireline network and/or or equivalent wireless network subscription identification information such as a subscriber information module and/or international mobile station equipment identifier. Access to the data identified by the service identification information may require additional authentication information to be provided, either within the initial service request or in subsequent service requests. For example, authentication such as a user identity and password combination may be requested before service information for a particular service subscription is provided.

The embodiments of the invention seek to configure each device uniquely so that a credential data set comprising one or more service identifier(s) and/or authentication information can be automatically provided to a service platform either directly or indirectly to access service information. Some embodiments of the invention seek to provide a method for configuring a device with a unique credential data set which obviates and/or mitigates the need for any manual input of one or more items of credential data required to retrieve data associated with a specific service subscription from a remote server.

Each service platform is capable of providing service information to a large number of devices in the same communications system however each device is configured to retrieve only information for which the respective credentials provide access. The credentials are automatically generated either uniquely by the device and/or by the device in combination with a remote platform, which may comprise the service platform. In this way, a device may access information associated with a service identifier which is either directly represented in the credentials provided by the device in a service request or which is derivable from the credentials in the service request generated by the device by a remote server. This enables a device to retrieve information which is specific to the service identifier from the service platform. In some embodiments where the credential information requires additional information to be provided by a remote server, the remote server may comprise the service platform and/or one more other servers and/or data store(s) acting in combination.
Some specific embodiments of the invention seek to provide a method of, and/or apparatus for, activating a connectionless session-based communications service for a device which requires the device to be associated with a calling line identity in order to receive data associated with the service from a service platform.

Selected embodiments of the invention will now be described with reference to the accompanying drawings which are by way of example only and in which:
Figure 1 shows schematically a communications system for providing a service to a device;
Figure 2 shows schematically a service activation system for activating a device to provide a service;
Figures 3A to 3D show methods of accessing service information according to embodiments of the invention; and
Figures 4A and 4B show methods of accessing service information according to other embodiments of the invention.

The best mode of the invention currently known to the inventor is set out below.

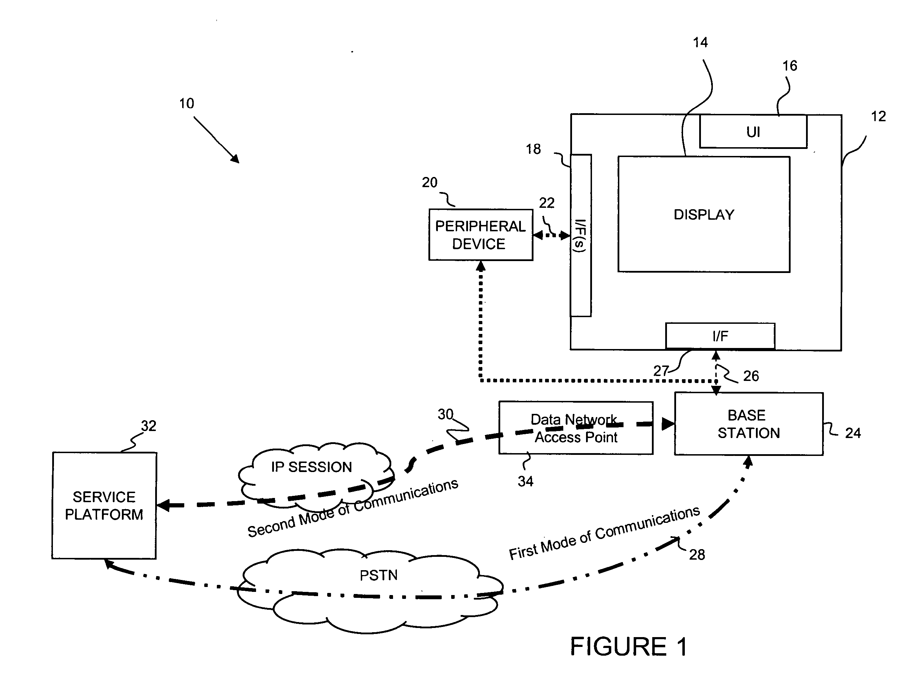

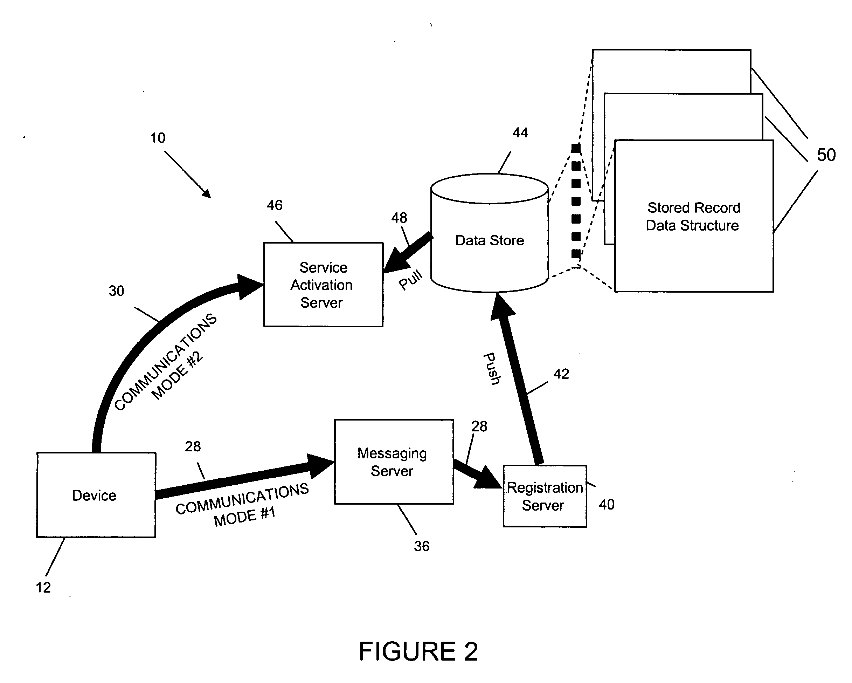

Figures 1 and 2 relate to various methods of configuring a device for use in a method of accessing service information according to an embodiment of the invention.

Figure 1 shows a communications system 10 in which a communications device 12 is arranged to access and retrieve service information from a remote service platform 32 by providing appropriate credential information to authenticate a data retrieval request. The service information to be retrieved is uniquely associated with a service identifier, for example, a calling line identifier. An example of a service platform 32 comprises a server offering a voicemail service.

The service platform 32 as shown in Figure 1 is configured to enable service information to be retrieved using a service request sent using a mode of communication from which the service platform cannot directly retrieve the service identifier. For example, if a request for voicemail is sent to a server using a broadband IP session, the calling line identifier of the communications line would not be apparent from the communications mode used to send the request.

Communications system 10 comprises a plurality of devices 12 located on premises associated with respective communications service subscribers, although only one device 12 is shown in Figure 1. The device 12 shown in Figure 1 comprises suitable data processing components (not shown), a display 14 and a user interface 16 which enables a user to control operation of the device and/or provide data input. Device 12 is provided with two modes of communications capability.

Telephone-type functionality, for example, may be provided on device 12 through appropriate transmission and receiving components for connecting to the public switched telephone network (PSTN), means to go on/off-hook, microphone and speaker components and/or device 12 may be provided with a communications-enabled interface 18 for communicating with at least one peripheral device 20, for example, a telephone device, using a suitable communications link 22, for example via a wireless local area connection (WLAN) such as Digital Enhanced Cordless Telecommunications (DECT) such as is shown in Figure 1.

Device 12 is arranged to communicate over a telephone communications line between the subscriber premises and the local exchange of the PSTN (not shown in Figure 1) using at least two different modes of communications via a suitable interface 27 which provides connectivity with a separate base-station 24 via a suitable wireless or wired communication link 26. As will be apparent to those of ordinary skill in the art, some or all of the communications functionality of base-station 24 may be integrated into device 12.

In Figure 1, device 12 uses a first mode of communication 28 which is a conventional public switched telephone network (PSTN) mode of communication. This mode provides the identity of the communications line between the local exchange of the public switched telephone network (PSTN) and the subscriber premises on which the device 12 is located and to which the device 12 is connected to via base station 24. This mode may also be used by other communications devices on the subscriber premises and the calling line identity or CLI will be directly derivable for the communications traffic sent using this mode of communication by any of the devices using the line in this mode of communication.

A second mode of communication 30 uses the same physical communications line as the first but supports traffic send using a connection-less data-packet mode of communication. The second mode of communication therefore does not associate the traffic with the physical line's CLI between the customer premises and the local exchange of the PSTN. This means that the CLI is not directly derivable for communications traffic send using the second mode of communication.

In the communications system shown in Figure 2, device 12 uses the second mode of communication 30 to establish a data session between the device 12 and a service supporting platform or server 32. The same server 32 also provides an equivalent service over the PSTN using the first mode of communication 28. However, a PSTN service is not supported by the same session-based service platform 32 as the PSTN calling line identity information is not automatically determinable from the communications protocols which are used.

The second mode of communication 30 provides a data communications service, for example an "always on" type of service such as that known as a "broadband service". Broadband services offer a relatively high-bandwidth connection at least in the direction of the local exchange to the subscriber premises. Such services may use data communications protocols such as the Asynchronous Digital Subscriber Line (ADSL) for example. The second mode of communications may be accessible directly by the device 12 and/or base station 14 or be via a suitable data network access point 34, for example, a router or hub. For example, the access point 34 supports wireless connectivity with the base station 24 and/or device 12 and/or with the server 32, using an appropriate high-bandwidth wireless communications protocol, for example, WiMax and/or WiFi in one embodiment of the invention.

Although in the embodiment shown in Figure 1, the second mode of communication 30 utilises the same communications line linking the subscriber premises to the local exchange of the public switched telephone network (PSTN) as the first mode of communication 28, in other embodiments it may utilise a wireless connection for a least part of the path taken between the device and the server 32. However, the identity of the telephone line associated with the subscriber premises is only capable of being detected from activity on the line associated with the first mode of communication 28. The second mode of communication uses a data session, for example, and IP session as is shown schematically in Figure 1. The data session is established and supported using data traffic which is packetised using a protocol such as the Internet Protocol which disassociates the data from a fixed path to its destination. As a result the data traffic sent using the second mode of communication 30 does not automatically contain any information providing a CLI for the physical line to the subscriber premises. As a result, the CLI cannot be automatically determined from a data session, for example an Internet Protocol session, even when running over the same physical line as the first mode of communication 28 uses when using the second mode of communication 30.

As previously mentioned above, in Figure 1, the device 12 communicates using both the first and second modes of communication via one or more suitable interfaces 27 with base station 24. However, in alternative embodiments of the invention, device 12 incorporates one or more or all of the communications functionality of the base-station 24 directly. Where all communications functions are incorporated into the device 12, and a separate base-station 24 is not required. Similarly, as would be well known to one or ordinary skill in the art, either or both of the base-station 24 and/or device 12 may also incorporate the communications functionality of a data network access point 34 in some embodiments of the invention.

Service platform 32 provides service information if a device requesting the service information is able to present credentials including an appropriate service identifier. Thus, if the service platform 32 is set up to recognise a calling line identifier as a service identifier, it can retrieve service information comprising voicemail information left for the PSTN number associated with that calling line identifier and thus provide a voicemail service. As shown in Figure 1, however, device 12 is configured to use the second data communications mode 30 to establish a connection-less packet-based session with a remote service providing platform 32. This mode of communications does not enable the service platform to determine the service identifier from the service request which is needed to access the service data provided by service platform 32. The service identifier is needed as this provides authentication information which is required as the voicemail service is associated with a particular subscriber to the PSTN telephone service identified through the CLI of the communications link between the local exchange to the customer premises associated with that particular subscriber.

The service information (for example, voice messages and/or equivalently any other subscription specific service data, such as video messages, facsimile messages, electronic mail messages or short text messaging messages etc) is stored in association with the service identifier so that the data store for on subscriber can be distinguished from service information stored for other subscribers to the service. As shown in Figure 1, device 12 uses the second data communications mode to access the service information from the service platform 32 only if the required service identifier can be associated with the request for service information that the device 12 generates. This requires the device 12 to be configured appropriately so that it can generate requests which include credentials which enable the service identifier to be presented to the service platform 32 when the device 12 seeks to retrieve service information. The device may be configured to include the service identifier with any requests it generates for service information or to provide its device identifier in any requests to enable an intermediate server to retrieve a service identifier and/or any other authentication information required and to forward these to the service platform. It is also possible to configure the device to request service and/or authentication information first from a remote server such as the authorisation server and once this information has been received by the device on a per request basis, the device may generate a second request which contains all necessary service identification and authorisation information and this can then be sent directly to the service platform 32.

Figure 2 of the accompanying drawings shows a device configuration process in which as part of the configuration process, a configuration computer program is run on the device 12. The same numbering system as was used in Figure 1 is retained for like elements of the invention in Figure 2.

In Figure 2 the device runs a configuration computer program which automatically triggers the generation of a first communications message which uniquely identifies the device by incorporating a unique device identifier, for example, its serial number which is addressed to a registration server 40.

The first communications message is then sent out over the communications line via the local exchange using the first mode of communications 27 via a message server 36 to the addressed registration server 40. For example, in one embodiment of the invention, the first communications message comprises a short message service (SMS) text message and message server 26 comprises a PSTN SMS server.

The message server 36 processes the received first message and processes it to extract the forwarding address for the registration service and the CLI of the line used by the first communications mode 38. The message server 36 determines from the registration server address that even if that CLI has not registered for the message service, the message to the registration server should be forwarded. This is advantageous as it means that a user of the service for which the device 12 is to be configured need not have previously registered with the message server 36 for the messaging service over the PSTN.

As shown in Figure 2, the first communications message then forwarded to a registration server 40 which processes the message to determine the presence of the device identifier and associates this identifier with the service identifier, here the CLI of the communications line used by the first mode of communications via which the first communications message was sent.

The registration server 40 then pushes the service identifier (the CLI) and the device identifier information to a data store 44 to locate and/or update credential data stored on data store 44 to associate the service identified by the CLI with the device identifier and the CLI. For example, a data record 50 may be stored which has a data structure which associates the CLI with the device identity of device 12. In some embodiments of the invention, the data record 50 has a data structure which associates the CLI with one or more entries for device and/or service characteristics, for example, if one or more services are to be provided for a CLI and if so, whether the service has been activated on a particular device identified in the data structure. This enables service identifiers to be associated with the device identifier for a plurality of different service subscriptions and also enables unique configuration information, for example, additional authentication information such as a network generated password or authentication code can be associated with a particular service identifier and/or device identifier.

The data is stored in such a way that a look-up operation can be performed using the device identifier to retrieve the associated credential information, for example, the associated CLI and/or any authentication information such as a passwords etc.

As shown in Figure 2, the registration server 40 pushes the service identifier (the CLI) and any other information extracted from the SMS such as the device identifier via a communications link 42 to a remote data store 44 however it is not essential for data store 44 and registration server 40 to be remotely located. As would be obvious to one of ordinary skill in the art the data store 44 and registration server 40 may be supported by the same physical platform. The data store 44 is any suitable indexed data storage facility, for example, a database, which is configured to associate a service identifier such as a CLI for a subscriber with a particular device identifier etc. It may also provide a means to store other information in association with a CLI, such as authentication information, as well as information for billing and/or service provision related purposes.

After data store 44 has been updated, the record for a service identifier such as a CLI is associated with a device identity for the device 12. The updating of the record may also generate additional authentication information for the service identified by the service identifier in some embodiments of the invention.

The service for which the device is to be activated requires a service identifier such as a PSTN CLI to retrieve service information. If the messaging service used by device 12 to send the first message to registration server 40 is not real-time or fully reliable, the configuration program script running on the device must delay further execution of certain actions before the configuration process proceeds. For example, the configuration process may wait a predetermined amount of time before continuing with the configuration process.

The configuration process continues with the device generating a second communications message which is sent to service activation server 46 using the second mode of communications 30 to request activation of a service.

Alternatively, however, once the data record 50 has been updated to indicate that the service identifier has been associated with a device identifier and/or with other authentication information, the registration server may generate an acknowledgement message, e.g., an acknowledgment SMS via the first mode of communication. When the device 12 receives the registration acknowledgement, it triggers the initiation of the second mode of communication to establish a data session with the activation server 46.

The data session, for example an Internet Protocol session, may be established earlier, but must be set up with the service activation server 46 so that a second message can be sent either as soon as the acknowledgement is received or a predetermined amount of time after the first message was sent. This second communication message requests activation of the service for the device.

The second communication message includes data which at least identifies the device 12 by means of the device identifier. It may also include some means of indicating which type of service is to be activated if the device has been associated with more than one type of service.

The service activation server 46 receiving the second message processes the received message to extract the device identifier and queries the data store to determine the service identifier associated with the device identifier and/or type of service.

The data records 50 of the data store 44 thus have a data structure enabling a data record 50 to be located when the activation server 46 performs a look-up operation or similar index retrieval operation based on at least a device identifier and/or additional information. If the device identifier is determined to be associated with a service-identifier, the activation server 46 amends the data record 50 to indicate that the service is now active for the device and CLI.

The data record 50 for a particular device identifier may also store additional information in association with the device and/or service identifiers, for example, authentication information may be stored and/or other information with which the device 12 may be uniquely configured. This configuration data is retrieved by authentication server 46 in one embodiment of the invention, but may be generated in another embodiment of the invention by the server 46 once it has received confirmation that the service is now active.

In one embodiment where the server 46 generates additional authentication information, it pushes this information to the data store 44 for storage in association with the active record for the device and also pushes the same authentication information in association with the service identifier to the service platform.

In another embodiment, the service platform has pushed the authentication information to the data store for storage in association with the service identifier, and the authentication information is then available to the authentication server 46. The server 46 may retrieve this information from the data store when it receives requests for access to service information from the device by performing a look-up operation. Alternatively, the authentication information is pushed to the device.

Once unique configuration data has been sent to device 12 using the data session supported by the second mode of communication 30, it is used by the continuing configuration process to uniquely configure device 12.

Thus the device 12, after the configuration data has been downloaded from the service activation server 46, is able to complete the configuration process. The configuration information downloaded enable the device to generate requests for one or more service that the device was found to be associated with in the data store 12.

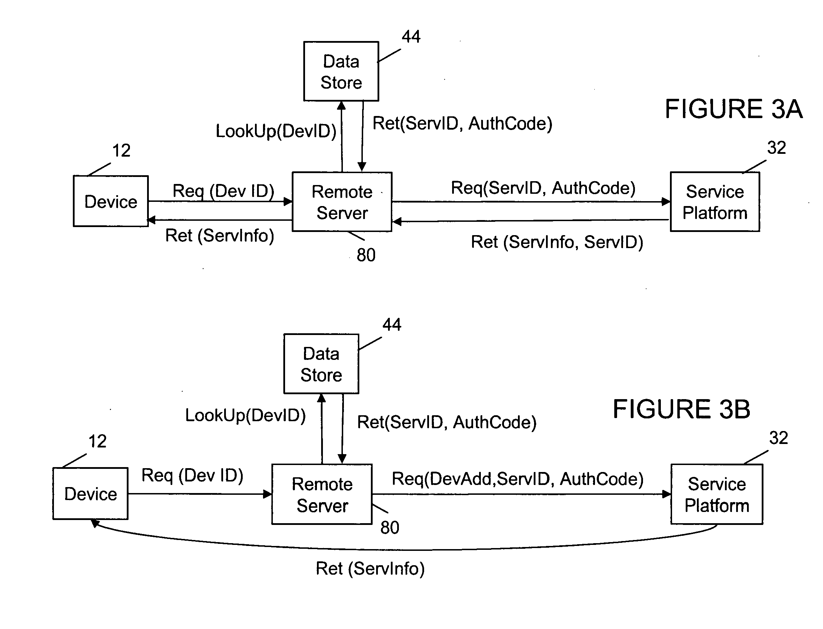

Figures 3A to 3C show various methods of accessing service information via a service platform 12 according to one embodiment of the invention in which device 12 is configured to generate a request which includes a device identifier in a request for access to service information which is sent a remote server 80. The server 80 then performs a look-up operation to retrieve a service identifier and authorisation code.

In Figure 3A the server 80 then either generates a second request or modifies the first request received in order to send a request for service information to the service platform 32 which includes a service identifier and authentication information, for example, a password or similar authentication code. The service platform 32 processes the request to determine if the authentication information received in the request corresponds with the information it has for the account associated with that service identifier, and if so, determines if any service information, e.g. voicemail messages or the like, exists for that account. If service information does exist, the service platform sends the service information back to the remote server 80, which then forwards it to the device 12.

Figure 3B shows an alternative embodiment which is similar to that shown in Figure 3A. In Figure 3B, after performing the lookup operation to determine the authentication information, the remote server 80 sends sufficient information in the request for service information to the service platform 32 to enable the service platform 32 to respond directly to the device 12 if the request is authenticated and service information exists which is to be forwarded to the device 12.

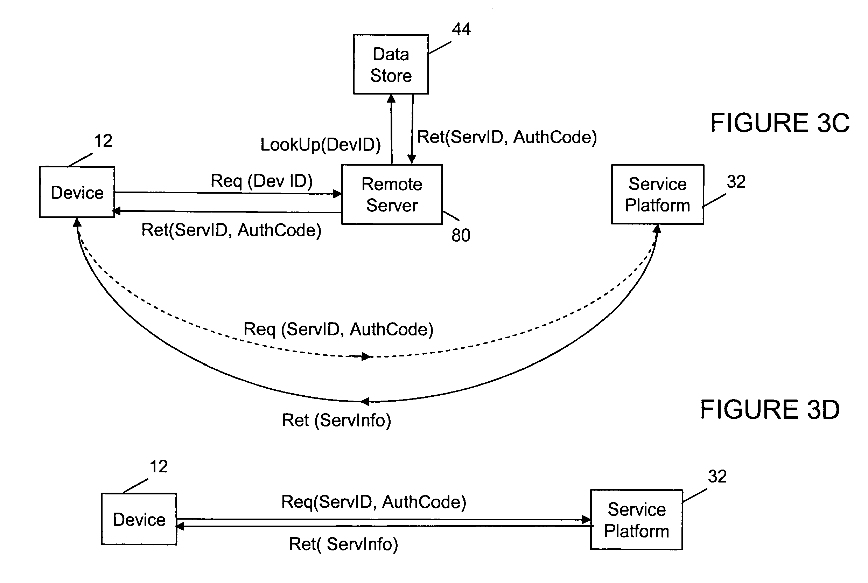

Figure 3C shows another alternative embodiment. In Figure 3C, the device sends a request including a device identifier to the remote server 80. The remote server 80 then performs a lookup operation to determine a service identifier and/or authentication information and the remote server 80 then responds to the device 12 by returning the authentication information and service identifier to the device 12. This information enables the device 12 to generate a second request for service information containing the relevant authentication information and service identifier which is then sent directly to the service platform 12.

Figure 3D show an embodiment in which the device 12 was uniquely configured during the configuration process to generate requests which include the service identifier and authentication information. This enables the device 12 to generate requests automatically for service information which can be processed by the service platform 32 without requiring any intermediate proxy server lookup operations. The service platform 32 responds directly to the device 12.

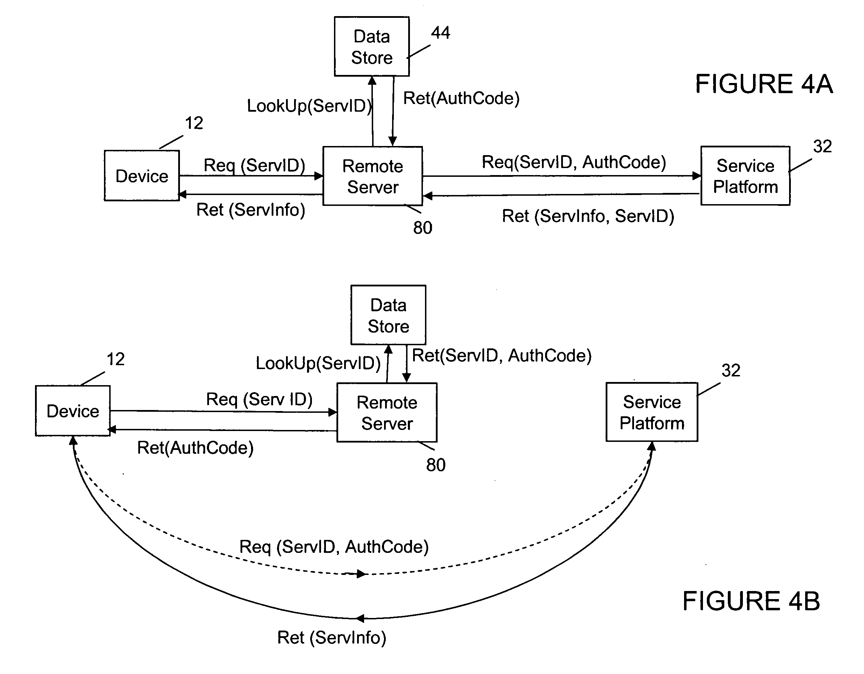

Figure 4A shows an alternative embodiment of the invention, in which the device 12 was configured to automatically include the service identifier with requests to access service information, but for which an additional authentication code is retrieved by proxy server 80. The proxy server 80 then forwards the authentication code with the service identifier to the service platform 32, which responds via the remote server.

Figure 4B shows another embodiment in which the device 12 is configured to send a service identifier to a proxy server to obtain additional authentication information to access service information. The proxy server 80 sends the authentication information to the device, which then includes the service identifier and the authentication information in a request to access service information which is sent to the service platform 32. The service platform 32 then verifies the request by confirming if an account exists which has the same service identifier and authentication information and if the request is verified, if any service information exists for that account sends the service information to the device 12.

Those of ordinary skill in the art will find it apparent that after service information has been provided by the service platform 12 to the device 12, it may be deleted on the server or it may stay on the server. The service information retrieved by the device 12 from the service platform 32 may comprise only new service information not previously retrieved by the device.

Those of ordinary skill in the art will be aware that many other combinations of service information, device information and authentication information may be included in requests generated by the device 12 and/or proxy server 80 depending on the way the device 12 and proxy server 80 have been configured to implement the service.

The requests for service information are sent using a data session established between the device 12 and the proxy server 80 or service platform 32 to enable the service information data to be downloaded automatically by the device 12.

The device 12 displays an indication in a preferred embodiment of the invention whenever additional service information has been downloaded.

As the device is configured to use a remote server to obtain authentication information comprising at least authentication information in addition to a service identifier, a greater level of security can be provided as the authentication information is generated within the network. The level of security can be improved if the authentication information is not stored on the device 12. The service identifier may be provided by the device or retrieved in association with the authentication information. In embodiments where the device is not provided with any authentication information, a higher level of security can be provided than might otherwise exist if the authentication information is downloaded to the device. It is also possible, when the authentication information is retrieved by the remote server each time access to information is requested by the device, for the authentication information to be generated using a one-time password technique, i.e., for it to have a limited lifetime or be otherwise synchronised to match a password which would beheld by the service platform in association with the service identifier.

In embodiments of the invention in which the service platform 32 establishes a session directly with the device 12 to provide service information, such as those shown in Figures 3C and 4A, the device 12 may need to have its firewall or equivalent security features suitably configured. The information required to configure the device to enable this is provided as part of the configuration information downloaded during the configuration process but as those of ordinary skill in the art will be aware, any suitable mechanism which configures the firewall may be employed instead.

Those of ordinary skill in the art will be aware of modifications, variations, and functional equivalents to features of the embodiments described herein and the scope of the invention is not to be limited by the specific embodiments described herein above but instead should be determined by the accompanying claims.

## Claims

**1.** A method for a communications device to access service information associated with a service identifier, the method comprising:
at the device:
generating a request for service information, the request including an identifier;
at a server remote from the device:
receiving the request;
processing the request to extract an identifier;
performing a look-up operation based on said identifier which retrieves at least authentication information which was generated remotely from the device to uniquely configure access by the device to service information associated with said service identifier;
presenting said authentication information and said service identifier to a service platform via which said service information is retrievable;
at the service platform:
processing the request to extract said service identifier and said authentication information;
verifying that the authentication information and service identifier match equivalent data values stored in association with service information, and if so:
sending service information to said requesting device.

**2.** A method as claimed in claim 1, wherein the identifier comprises a service identifier for the service subscription, and said request is processed to extract the service identifier, and said look-up operation is based on said service identifier to retrieve said authentication information.

**3.** A method as claimed in claim 1, wherein the identifier comprises a device identifier for the device, and said request is processed to extract said device identifier to retrieve both said service identifier and authentication information.

**4.** A method as claimed in any previous claim, wherein said remote server also provides address information for said device to said service platform, and wherein said service platform uses said address information to send said service information to the device.

**5.** A method as claimed in any previous claim, wherein said service platform sends said service information to said remote server, and said remote server forwards said service information to said device.

**7.** A method for a communications device to access service information associated with a service identifier, the method comprising:
at the device:
generating a request for service information, the request including an identifier;
at a server remote from the device:
receiving the request;
processing the request to extract an identifier;
performing a look-up operation based on said identifier which retrieves at least authentication information which was generated remotely from the device to uniquely configure access by the device to service information associated with said service identifier;
sending said authentication information and said service identifier to the device;
at the device generating a second request for service information to a service platform via which said service information is retrievable;
at the service platform:
processing the request to extract said service identifier and said authentication information;
verifying that the authentication information and service identifier match equivalent data values stored in association with service information, and if so:
sending service information to said requesting device.

**8.** A method as claimed in any previous claim, wherein, during the initial set up of the device (12) to enable the device to be automatically authenticated for access to said service information associated with said service identifier, the device was configured by a method comprising:
at a server remote from the device (12):
receiving a message sent from the device (12);
processing the message to extract a device identifier;
determining if said device identifier is associated with a service identifier, and if so:
generating an authentication code;
storing the authentication code in association with the device identifier and the service identifier;
registering said authentication code in association with the service identifier.
sending device-specific configuration data to the device (12) for use during the configuration process,
wherein after the configuration process is completed, the device-specific configuration data enables automatic authentication using said authentication code when the device seeks access to said service information.
